# EUROPÄISCHE PATENTANMELDUNG

(11) **EP 0 581 734 A1**
(43) Veröffentlichungstag der Anmeldung: **02.02.1994**
(21) Anmeldenummer: 93810512.9
(22) Anmeldetag: 19.07.1993
(51) Int. Cl.: E03C 1/122

(54) **Abwasserleitungsmodul**

(30) Priorität: 30.07.1992 CH 2396/92
(71) Anmelder: Geberit AG, CH-8645 Jona (CH)
(72) Erfinder: Schweigert, Adolf, D-7777 Salem 2 (DE); Münch, Werner, D-7108 Möckmühl (DE)
(74) Vertreter: Groner, Manfred

(57) **Zusammenfassung**

Das Abwassermodul weist zwei gelenkig miteinander verbundene Teile (8,9) auf. Der eine Teil (9) ist ein separat hergestellter Anschlussbogen, der in einer Abzweigung einer Sammelanschlussleitung (2) drehgelenkig und axial fixiert mit dem anderen Teil (8) verbunden ist. Die Drehachse (A) des Drehgelenks verläuft vorzugsweise parallel zur Längsrichtung (C) der Sammelanschlussleitung (2). Die Anpassung an unterschiedliche Anschlusshöhen und -tiefen erfolgt durch ein Verdrehen der beiden Teile (8,9) um die Drehachse (A) bzw. Längsrichtung (C) der Leitung (2).

## Beschreibung

Die Erfindung betrifft ein Abwasserleitungsmodul für eine an einen Fallstrang anzuschliessende Sammelanschlussleitung, die ein gerades und an beiden Enden steckbar und flüssigkeitsdicht verbindbares Sammelrohr und eine an dieses Rohr angeschlossene Abzweigung aufweisen.

Ein Abwasserleitungsmodulsystem mit einem Modul dieser Art wird vom Anmelder seit einiger Zeit hergestellt und hat sich an sich bewährt. Der Grundgedanke dieses Systems besteht darin, dass einem Montageelement ein bestimmtes Leitungsmodul zugeordnet ist. Das Leitungsmodulsortiment umfasst ein Leitungsmodul für Waschtische, ein Leitungsmodul fürWC-Anlagen und ein Leitungsmodul für Bidet. Gegenüber nicht modular aufgebauten Systemen hat dieses System den Vorteil, dass auf der Baustelle weniger Formstücke bereitgehalten werden müssen und das Sortiment minimal gehalten werden kann. Nicht zu vermeiden war allerdings, dass bei Modulen dieses Systems zur Anpassung an die jeweiligen Anschlusshöhen Schweissarbeiten notwendig waren.

Zum Anschliessen einer WC-Schüssel ist ein Leitungsmodul bekannt, bei dem ein Rohrbogen mit dem einen Schenkel teleskopartig axial verschiebbar mit einem schrägen Stutzen der Sammelleitung verbunden ist. Durch axiales Verschieben des Rohrbogens lassen sich Lagetoleranzen ausgleichen. Mit einer Anschlussvorrichtung können lediglich beim Anschliessen einer WC-Schüssel Schweissarbeiten vermieden werden.

Der Erfindung liegt die Aufgabe zugrunde, ein Abwasserleitungsmodul der genannten Art zu schaffen, mit dem das bekannte Sortiment an Leitungsmodulen verkleinert werden kann und bei dem Schweissarbeiten zur Anpassung an unterschiedliche Anschlusshöhen und -tiefen vermieden sind.

Die Aufgabe ist dadurch gelöst, dass das Leitungsmodul zweiteilig ausgebildet ist und ein separat hergestellter Teil ein Anschlussbogen ist, der in der Abzweigung drehgelenkig und axial fixiert mit dem anderen Teil verbunden ist.

Beim erfindungsgemässen Abwasserleitungsmodul ist das Leitungsmodul jeweils aus zwei separat hergestellten Kunststoffformstücken hergestellt. Die beiden Teile sind im Bereich der Abzweigung drehgelenkig miteinander verbunden. Die Anpassung an unterschiedliche Anschlusshöhen und -tiefen wird durch ein Verdrehen der beiden Teile um ihre Drehachsen einfach und genau erreicht. Damit ist eine einfachere und rationellere Montage möglich, bei der die Leitungsteile lediglich noch abgelängt und zusammengesteckt werden müssen. Schweissarbeiten auf der Baustelle sind beim er- findungsgemässen Abwasserleitungsmodul nicht erforderlich. Auf der Baustelle müssen somitweniger Formstücke und auch weniger Werkzeuge bereitgehalten werden.

Es hat sich gezeigt, dass eine besondere günstige Anpassbarkeit an die Anschlusshöhen dann gegeben ist, wenn beim erfindungsgemässen Leitungsmodul die Drehachse parallel zum Sammelrohrverläuft. Dieses Leitungsmodul eignet sich zum Anschliessen aller gängigen Apparate, wie beispielsweise Waschtische, Urinale, Waschmaschinen, Wannen und Brausewannen, Spültische sowie Bidet. Bei diesem Leitungsmodul kann der Anschlussbogen in jede beliebige Neigung geschwenkt werden. Damit ist sowohl horizontal als auch vertikal ein Achsversatzangleich an die unterschiedlichsten Sanitärapparte möglich.

Weitere vorteilhafte Merkmale und Vorteile ergeben sich aus den weiteren abhängigen Patentansprüchen sowie der nachfolgenden Beschreibung und den Zeichnungen.

Ein Ausführungsbeispiel des erfindungsgemässen Abwasserleitungsmodulsystems wird nachfolgend anhand der Zeichnungen näher erläutert. Es zeigen:
Fig. 1 eine teilweise geschnittene Ansicht einer Abwassersammelleitung an einem Fallstrang und mit hier lediglich schematisch gezeigten Sanitärkörpern,
Fig. 2 ein Schnitt entlang der Linie 11-11 in Fig. 1,
Fig. 3 schematisch eine Sammelleitung mit einer angeschlossenen Badewanne, und
Fig. 4 schematisch ein an eine Abwassersammelleitung angeschlossenes Bidet.

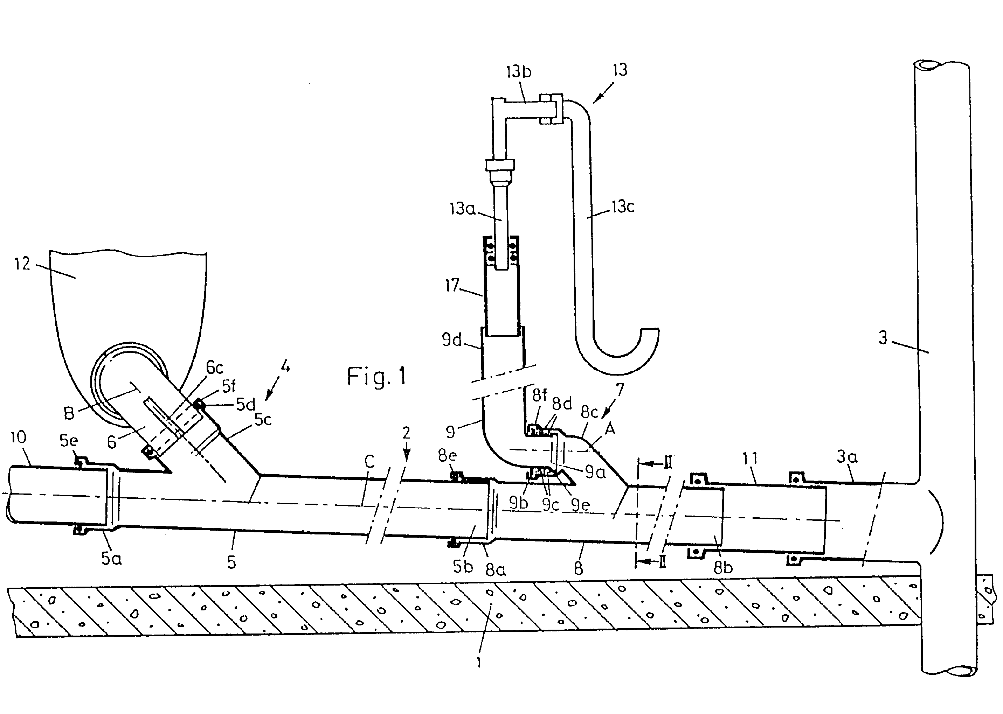

Die Fig. 1 zeigt hier lediglich andeutungsweise eine WC-Anlage 12 und einen Waschmaschinen-Anschluss 13, die über eine Sammelanschlussleitung 2 mit einem Fallstrang 3 verbunden sind. Die Sammelanschlussleitung 2 ist wie üblich bezüglich eines Gebäudebodens 1 geneigt, beispielsweise mit einem Gefälle von 0,5 cm/m.

Bei dem hier gezeigten Ausführungsbeispiel einer Sammelanschlussleitung 2 sind zwei Leitungsmodule 4 und 7 zusammengesteckt und mit einem ebenfalls an beiden Enden gesteckten Leitungsrohr 11 mit einem Stutzen 3a des Fallstrangs 3 verbunden. Ein weiteres Rohrstück 10 kann am anderen Ende der Sammelanschlussleitung 2 mit weiteren Modulen verbunden sein.

Das Leitungsmodul 4 besteht aus einem Sammelrohr 5 und einem um 90° abgebogenen Anschlussbogen 6, die separat als Formstücke hergestellt sind. Das Sammelrohr 5 weist ein Ende 5a mit einem in eine Innennut eingelegten Lippendichtungsring 5e sowie ein gegenüberliegendes Ende 5b auf, das in ein Ende 8a eines weiteren Sammelrohres 8 eingeschoben und mit einem Dichtungsring 8e flüssigkeitsdicht abgedichtet ist. Die beiden Enden 5a und 8a können gleich ausgebildet sein. Das Sammelrohr 5 weist zudem einen vergleichsweise kurzen Abzweiger 5c auf, der mit einem Winkel 45° zur Längsrichtung der Leitung 2 geneigt ist und der ebenfalls einen in eine Innennut eingelegten Dichtungsring 5d aufweist. In den Abzweiger 5c ist der Anschlussbogen 6 eingeschoben. Wie ersichtlich, weist der Bogen 6 zwei hakenförmige elastisch auslenkbare Arme 6c auf, die auf der Aussenseite des Bogens 6 angeordnet sind. Die Arme 6c umgreifen einen Bund 5f des Abzweigers 5c und ermöglichen eine begrenzte Verschiebbarkeit des Anschlussbogens 6 in der Längsrichtung des Abzweigers 5c. In jeder Auszugsstellung ist eine Drehung des Anschlussbogens 6 um die Achse der drehgelenkigen Verbindung der beiden Teile 6 und 5 möglich. Die Längen der Arme 6c sind so gehalten, dass auch in der in Fig. 1 gezeigten Endposition die beiden Teile 5 und 6 flüssigkeitdicht miteinander verbunden sind. Das andere Ende des Anschlussbogens 6 weist ebenfalls einen hier nicht gezeigten Dichtungsring auf, der den Anschlussbogen 6 gegenüber einem ebenfalls nicht gezeigten Verlängerungsstück abdichtet. Der Anschlussbogen 6 und das Verlängerungsstück sind ebenfalls um die Verbindungsachse beliebig verdrehbar und in begrenztem Mass auch in Achsrichtung verschiebbar.

Das Leitungsmodul 7 für den Anschluss einer hier nicht gezeigten Waschmaschine besitzt ebenfalls zwei separat hergestellte Teile 8 und 9, die flüssigkeitsdicht zusammengesteckt sind und ein Drehgelenk bilden, das eine Drehachse Aaufweist, die parallel zur Längsrichtung C der Sammelanschlussleitung 2 ist. Im Gegensatz zum Drehgelenk des Leitungsmoduls 4 ist dasjenige des Leitungsmoduls 7 axial fixiert. Dazu sind an einem Abzweiger 8c Rastnocken 8f angeformt, die einen Aussenflansch 9b des einen abgebogenen Endes 9a des anderen Teils 9 hintergreifen. der Flansch 9b und die Nocken 8f sind verrastet und ermöglichen ein stufenloses Verdrehen der Teile 8 und 9 um die Achse A. Das Ende 9a weist zudem mehrere Nuten 9c auf, in die zwei Dichtungsringe 8d eingelegt sind. Am äusseren Ende ist zudem ein umlaufender abgestufter Führungsring 9e angeformt. Das andere Ende 9d des Teils 9 ist wesentlich länger und dient zur Aufnahme eines Verlängerungsrohres 17 und ist zudem ablängbar. Das Rohr 17 verbindet den Teil 9 mit dem Waschmaschinen-Anschluss 13, der aus bekannten Leitungsteilen 13a, 13b und 13c besteht.

Die beiden Leitungsmodule 4 und 7 sind unabhängig voneinander um die Längsachse C der Sammelanschlussleitung 2 drehbar. Das Abwasserleitungsmodulsystem besteht somit aus den beiden Leitungsmodulen 4 und 7. Die Sammelanschlussleitung 2 kann selbstverständlich beliebig aus solchen Modulen 4 und 7 zusammengestellt sein und es versteht sich, dass die Fig. 1 lediglich ein mögliches Ausführungsbeispiel einer solchen Sammelanschlussleitung zeigt.

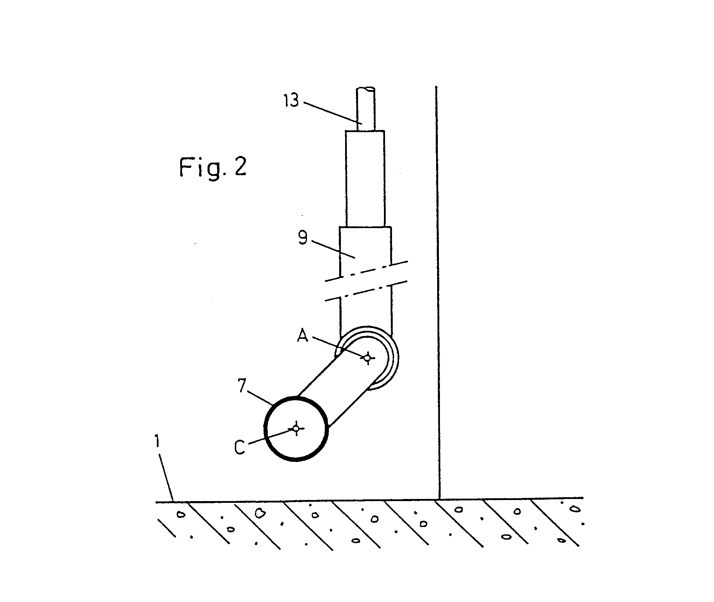

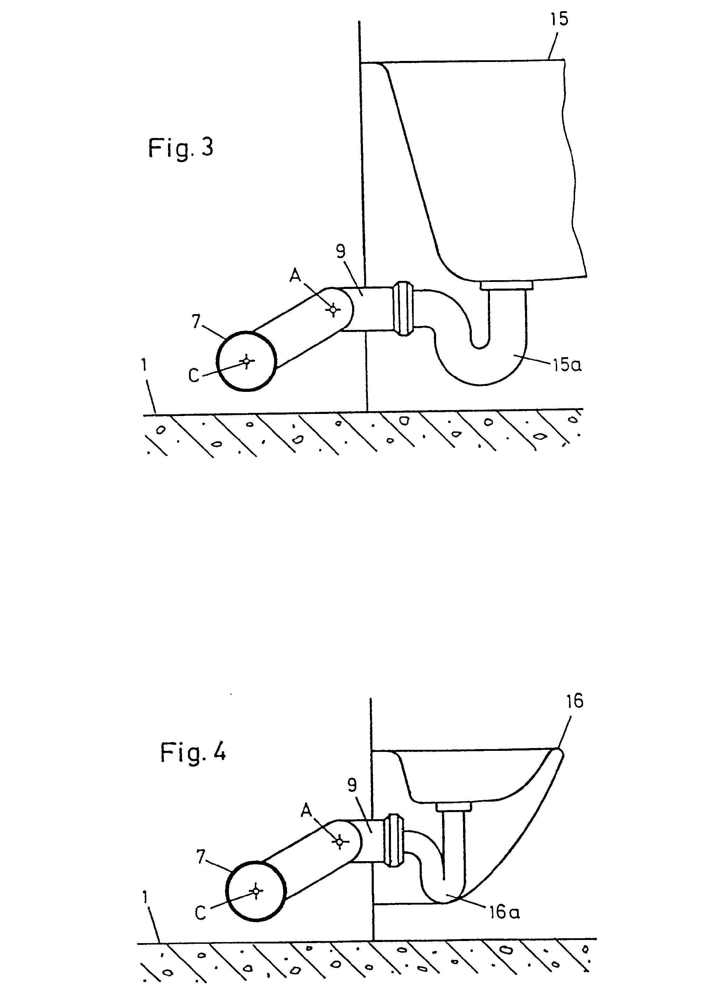

Die Fig. 2 bis 4 zeigen Ansichten in Längsrichtung der Sammelanschlussleitung 2. In den Fig. 3 und 4 ist schematisch der Anschluss einer Wanne 15 bzw. eines Bidets 16 gezeigt.

Hier verläuft ein Ende des Teils 9 jeweils horizontal und ist mit einem ebenfalls horizontalen Bereich eines Siphons 15a bzw. 16a zusammengesteckt. Eine Anpassung an unterschiedliche Anschlusshöhen der Wanne 15 bzw. des Bidets 16 erfolgt hier durch ein Verdrehen der Teile 8 und 9 um die Achsen C bzw. A.

## Patentansprüche

1. Abwasserleitungsmodul für eine an einem Fallstrang (3) anzuschliessende Sammelanschlussleitung (2), die ein gerades und an beiden Enden (5a,5b,8a,8b) steckbar und flüssigkeitsdicht verbindbares Sammelrohr (5,8) und eine an dieses angeschlossene Abzweigung aufweisen, dadurch gekennzeichnet, dass das Leitungsmodul (7) zweiteilig ausgebildet ist und ein separat hergestellter Teil (9) ein Anschlussbogen ist, der in der Abzweigung drehgelenkig und axial fixiert mit dem anderen Teil (8) verbunden ist.

2. Leitungsmodul nach Anspruch 1, dadurch gekennzeichnet, dass das Leitungsmodul (7) in derAbzweigung eine Drehachse aufweist, deren Achse (A) parallel zur Längsrichtung (C) der Sammelanschlussleitung (2) verläuft.

3. Leitungsmodul nach Anspruch 1 oder 2, dadurch gekennzeichnet, dass die beiden Teile (8,9) zusammengeschoben sind und Mittel (9d,8f) zur axialen Fixierung der beiden Teile aufweisen.

4. Leitungsmodul nach Anspruch 3, dadurch gekennzeichnet, dass die beiden Teile (8,9) im Bereich des Drehgelenkes miteinander verrastet sind.

5. Leitungsmodul nach einem der Ansprüche 1 bis 4, dadurch gekennzeichnet, dass der einen Anschlussbogen bildene Teil (9) ein 90° Bogen ist, wobei der eine Arm parallel zur Längsrichtung (C) der Sammelanschlussleitung (2) und der andere Arm rechtwinklig dazu verlaufen.
